(19) **Europäisches Patentamt**

**European Patent Office**

**Office européen des brevets**

(11) Numéro de publication: **0 078 534**
**B1**

(12) **FASCICULE DE BREVET EUROPEEN**

(45) Date de publication du fascicule du brevet:
26.02.86

(51) Int. Cl.⁴: **H 02 H 1/06, H 02 H 3/06**

(21) Numéro de dépôt: **82110090.6**

(22) Date de dépôt: **02.11.82**

(54) **Dispositif de commande d'un cycle de déclenchement et de réenclenchement d'un disjoncteur.**

(30) Priorité: **04.11.81 FR 8120638**

(43) Date de publication de la demande:
**11.05.83 Bulletin 83/19**

(45) Mention de la délivrance du brevet:
**26.02.86 Bulletin 86/9**

(84) Etats contractants désignés:
**AT BE CH DE FR GB IT LI LU NL SE**

(56) Documents cités:
**FR - A - 2 212 666**
**FR - A - 2 336 786**
**US - A - 3 366 848**

**REVUE GENERALE DE L'ELECTRICITE, vol. 81, no. 5, mai 1972, pages 303-307, Paris (FR); CH. BENOIT et al.: "Commande d'un disjoncteur par déclencheur secondaire électronique à maximum de courant sans source auxiliaire extérieure"**

(73) Titulaire: **ALSTHOM, 38, avenue Kléber, F-75784 Paris Cédex 16 (FR)**

(72) Inventeur: **Orgeret, Lucien, 72, boulevard Pinel, F-69003 Lyon (FR)**
Inventeur: **Ebersohl, Gérard, Les Acacias 282, Chemin des Fontanières, F-69350 La Mulatiere (FR)**
Inventeur: **Valacogne, René, 5, rue Constatine, F-69001 Lyon (FR)**
Inventeur: **Moncorge, Jean-Paul, 229, Cours Emile Zola, F-69100 Villeurbanne (FR)**

(74) Mandataire: **Weinmiller, Jürgen et al, Zeppelinstrasse 63, D-8000 München 80 (DE)**

**Description**

La présente invention est relative à un dispositif pour la commande d'un cycle de déclenchement et de réenclenchement d'un disjoncteur, principalement d'un disjoncteur de protection d'une ligne à moyenne tension (3 à 36 kV), muni de sources d'énergie permettant d'effectuer successivement des manoeuvres d'ouverture et de fermeture, l'energie de ces sources étant liberable par action d'organes munis chacun d'une lobine d'actionnement.

On sait qu'en cas de défaut sur un réseau aérien protégé par un disjoncteur, l'ouverture de ce dernier, suivie rapidement de sa fermeture, permet d'éliminer 80% environ des défauts d'isolement.

Cette séquence est appelée "cycle de réenclenchement rapide". Il existe également d'autres cycles utilisés pour s'affranchir d'un défaut, tel que celui connu sous le nom de cycle de réenclenchement lent. Le plus souvent, des sources d'énergie auxiliaires (gaz comprimé, batterie) sont nécessaires, en plus des sources d'énergie susolites, pour assurer la commande et un cycle.

It exist cependant une technique dans laquelle la commande de l'ouverture du disjoncteur ne nécessite pas de source auxiliaire.

L'énergie nécessaire à l'ouverture du disjoncteur est emmagasinée dans un ressort maintenu bandé par une pièce effaçable.

La libération du ressort est assurée au moyen d'un percuteur, qui est un appareil comportant une bobine électrique dont l'excitation, sous faible puissance libère une énergie mécanique suffisante pour déplacer la pièce effaçable maintenant le ressort.

La bobine du percuteur est alimentée par le courant de défaut lui-même, prélevé au moyen d'un transformateur de mesure de courant.

On a réalisé des dispositifs dans lesquels la commande de la fermeture du disjoncteur (après ouverture sur défaut) est assurée sans source d'énergie auxiliaire.

Ces dispositifs comprennent, pour chaque phase, un transformateur de tension dont le primaire est branché entre le conducteur de phase et la terre, et dont le secondaire alimente un condensateur, qui se charge pendant les phases où la ligne fonctionne.

L'énergie du condensateur est utilisée pour commander la fermeture du disjoncteur.

Les dispositifs de ce type sont généralement encombrants et coûteux; par ailleurs, ils n'assurent pas un réenclenchement sur défaut, à moins de les brancher en amont du disjoncteur, ce qui n'est pas toujours possible.

Un but de l'invention est de réaliser un dispositif de commande d'un cycle d'ouverture et de fermeture d'un disjoncteur, peu encombrant, peu coûteux, qui ne nécessite aucune source d'énergie auxiliaire et qui soit d'une sûreté totale.

Ce but est atteint par le dispositif tel qu'il est caractérisé dans la revendication 1.

Avantageusement, les sources d'énergie sont constituées par des ressorts armés.

L'invention va être précisée par la description détaillée d'un mode préféré de réalisation de l'invention, en référence au dessin annexé dans lequel:

la figure 1 est un schéma de réalisation du circuit de charge des condensateurs

la figure 2 est un schéma de réalisation du circuit de commande proprement dit

la figure 3 est un schéma d'un mode de réalisation d'un circuit de temporisation dont est muni le circuit de la figure 2.

la figure 4 est une variante de réalisation d'un circuit de mémoire.

L'exemple décrit ci-après est limité au cycle dit de réenclenchement rapide; la séquence est la suivante: en cas de défaut, détecté par un relais de surintensité, ce dernier donne un ordre d'ouverture. Le disjoncteur s'ouvre et après écoulement d'un temps donné, un premier ordre de fermeture du disjoncteur est donné par le relais. Si le défaut a disparu, le cycle est terminé.

Si le défaut persiste, un second ordre d'ouverture du disjoncteur est élaboré par le relais de surintensité (déclenchement définitif).

Le disjoncteur est muni de ressorts armés, l'un pour l'ouverture, l'autre pour la fermeture.

Le dispositif de l'invention comprend deux parties: une partie alimentation et une partie commande du dispositif.

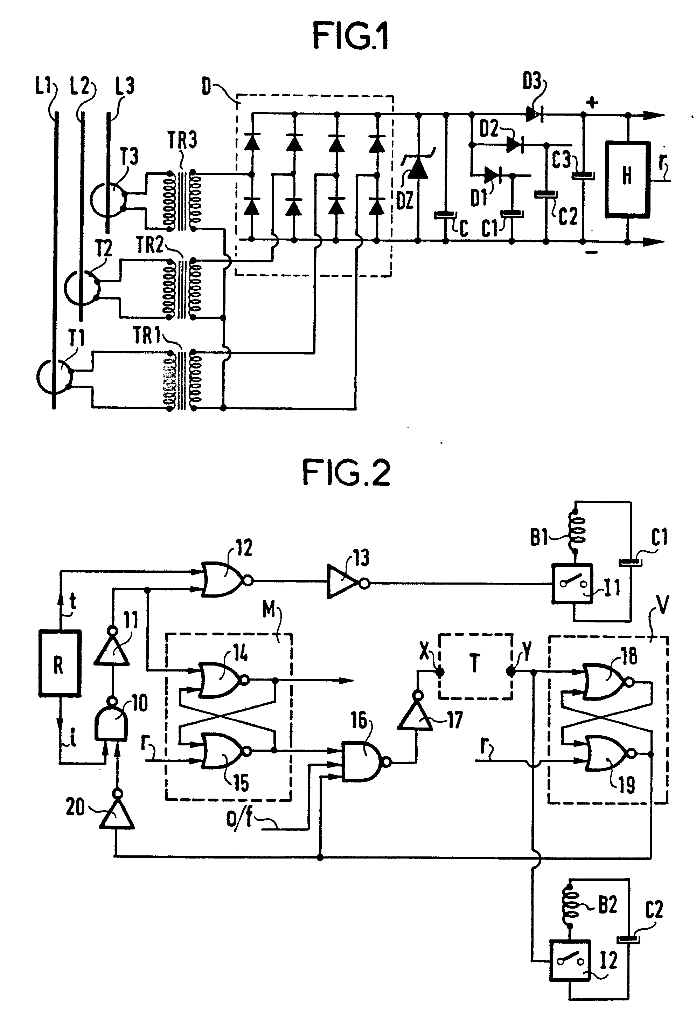

La partie alimentation est représenté dans la figure 1.

Le réseau triphasé L1, L2, L3 est muni de transformateurs de courants TC1, TC2, TC3 (En variante, il y a deux transformateurs sur deux phases, et un transformateur de courant homopolaire). Les sorties des transformateurs de courants alimentent, à travers des transformateurs de tension TR1, TR2, TR3, et par l'intermédiaire de ponts à diodes D, trois condensateurs C1, C2 et C3. Les condensateurs sont découplés par des diodes D1, D2 et D3 de telle sorte que le décharge d'un des condensateurs ne provoque pas la décharge des autres.

Une diode Zéner DZ et un condensateur de filtrage C complètent le circuit d'alimentation.

L'un des condensateurs (C3) sert à l'alimentation d'un circuit d'initialisation H destiné à l'initialisation correcte des circuits de mémoire et de temporisation qui seront décrit plus loin. Ce circuit est munie à ce effet d'une sortie r, qu'on retrouvera dans le schéma de la figure 2.

Le circuit de commande proprement dit est représenté dans la figure 2.

Il comprend un relais de surintensité R élaborant sur une première sortie un signal instantané i et sur une seconde sortie un signal temporisé t.

Les références B1 et B2 désignent respectivement les bobines d'actionnement des percuteurs (non représentés) commandant respectivement l'ouverture et la fermeture du disjoncteur.

Ces percuteurs sont advantageusement du type décrit dans le document FR—A—1 592 767.

La bobine B1 est disposée dans une boucle comprenant le condensateur C1 et un interrupteur statique I1.

De même la bobine B2 est disposée dans un boucle comprenant le condensateur C2 et un interrupteur statique I2.

Les deux sorties i et t du relais de surintensité sont reliées à l'interrupteur I1.

La première sortie i est reliée à I1 à travers un circuit $\overline{ET}$ référencé 10 suivi d'un inverseur 11, suivi d'un circuit $\overline{OU}$ 12, lui-même suivi d'un inverseur 13.

La seconde sortie t est connectée à une seconde entrée du circuit 12.

La sortie de circuit 11 est également reliée à une mémoire M comprenant deux circuit $\overline{OU}$ 14 et 15.

La sortie de la mémoire est reliée par un circuit $\overline{ET}$ 16 suivi d'un inverseur 17 à une entrée x d'un circuit de temporisation T. La sortie y du circuit de temporisation est reliée à un circuit de verrouillage y comprenant deux circuits $\overline{OU}$ 18 et 19.

La sortie du circuit de verrouillage est rebouclée, à travers un inverseur 20 sur le circuit 10.

Le circuit $\overline{ET}$ 16 reçoit en entrée l'information du circuit de verrouillage et une information o/f représentative de l'état ouvert ou fermé du disjoncteur.

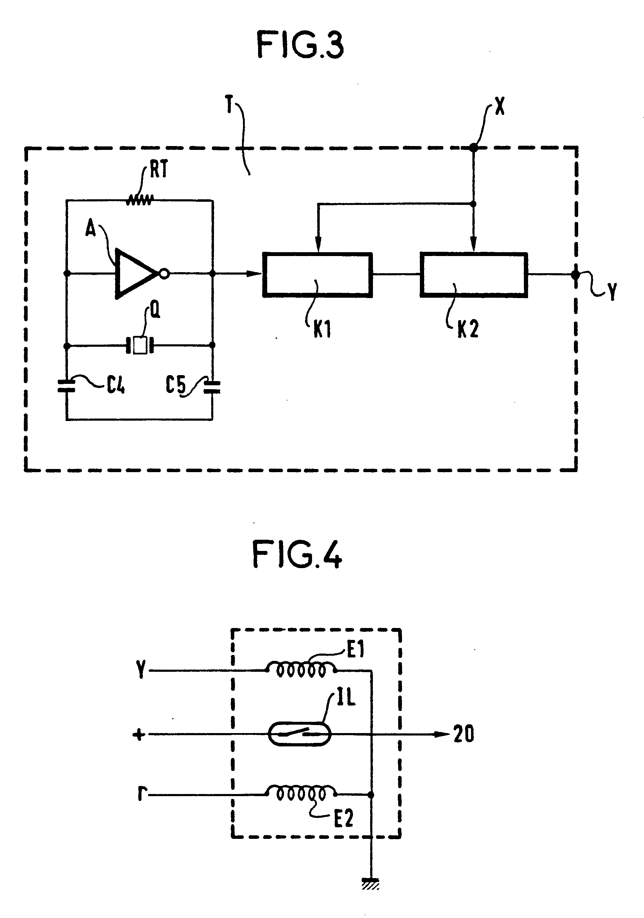

Dans un mode particulier de réalisation du circuit de temporisation T représenté dans la figure 3, il comprend un circuit intégrateur, constitué par un amplificateur opérationnel A, une résistance RT, des condensateurs C4 et C5, un quartz Q, et deux compteurs K1 et K2.

La sortie y du circuit de temporisation est reliée à l'interrupteur I2.

Le fonctionnment du circuit de commande de l'invention est le suivant:

un défaut sur la ligne entraîne la charge des condensateurs C1 à C3. Les circuits électroniques de la figure 2 sont réinitialisés. Le signal i de défaut instantané élaboré par le relais R provoque la fermeture de l'interrupteur I1 entraînant la décharge partielle du condensateur C1 dans la bobine B1. Ceci a lieu bien entendu si aucune information de verrouillage n'est présente sur le circuit 10. Le percuteur correspondant est actionné et libère le ressort armé dont une partie de l'énergie de détente est utilisée pour la fermeture du disjoncteur.

Par ailleurs le signal i issu du circuit 11 arme la mémoire M; cette dernière met en route le circuit de temporisation, si le disjoncteur est bien ouvert (l'information est fournie sur l'entrée f/o du circuit 16).

La temporisation définit le temps pendant lequel le disjoncteur reste ouvert.

A l'échéance de cette temporisation, le circuit de verrouillage V est armé, et la sortie du circuit de temporisation T commande la fermeture de l'interrupter I2, qui entraîne la décharge partielle du condensateur C2 dans la bobine B2, actionnant le percuteur qui libère le ressort de fermeture du disjoncteur.

Les circuits de mémoire M et V conservent leur état après ce réenclenchement du disjoncteur, de telle sorte que le disjoncteur s'ouvre définitivement si le défaut persiste, par action du signal temporisé t élaboré par le relais de surintensité R.

La figure 4 représente une variante de réalisation du circuit de mémoire V, comprenant un interrupteur à lames souples IL commandé par deux bobines E1 et E2. La mémoire M de la figure 2 peut être constituée également par un circuit de ce type.

On notera que la fermeture du disjoncteur, lors de la 2 ème phase du cycle a été accompagnée du réarmement du percuteur associé à la bobine B1.

L'invention n'est pas limitée aux disjoncteurs munis de ressort pour le stockage de l'énergie d'ouverture et de fermeture.

Des stockages à gaz comprimé, avec vannes commandables électriquement, peuvent être envisagés.

L'exemple de cycle qui vient d'être décrit n'est pas limitatif. L'invention s'applique à un cycle comprenant plusieurs phases successives de déclenchement et de réenclenchement, pourvu que les ressorts armés aient une énergie suffisante pour effectuer plusieurs manoeuvres.

Le dispositif de commande de l'invention qui vient d'être décrit peut, bien entendu, être utilisé conjointement avec un dispositif de commande à batterie auxiliaire déjà existant. On utilisera le dispositif de l'invention seul si la batterie est déchargée ou hors d'usage. Un organe de commutation permettra de passer automatiquement de l'un à l'autre des dispositifs.

**Revendications**

1. Dispositif pour la commande d'un cycle comprenant au moins une phase de déclenchement et au moins une phase de réenclenchement d'un disjoncteur muni de sources d'énergie permettant d'effectuer successivement des manoeuvres d'ouverture et de fermeture, l'énergie de ces sources étant libérable par action d'organes munis chacun d'une bobine d'actionnement (B1, B2), cartactérisé en ce que chaque bobine d'actionnement (B1, B2), qui est une bobine de percuteur, est disposée dans un circuit comprenant un condensateur (C1, C2) et un interrupteur commandable (I1, I2), le dispositif comportant un circuit de charge (T1—T3, TR1—TR3, D, DZ, C) des condensateurs (C1, C2) à partir des courtants de défauts et un relais de surintensité (R) élaborant des signaux séquentiels de commande des interrupteurs (T1, T2).

2. Dispositif selon la revendications 1, caractérisé en ce que les sources d'énergie sont des ressorts armés.

3. Dispositif selon l'une des revendications 1 à 2, caractérisé en ce que le dispositif comprend une première (B1) et une seconde (B2) bobine d'actionnement de deux percuteurs associés chacun à un resort armé respectivement pour l'ouverture et la fermeture du disjoncteur, l'interrupteur (I1) associé à la première bobine (B1) étant commandé directement par le relais (R), l'interrupteur (I2) associé à la seconde bobine (B2) étant commandé par le relais (R) à travers un circuit de temporisation (T).

**Patentansprüche**

1. Einrichtung zur Steuerung eines mindestens eine Ausschalt- und mindestens eine Wiedereinschaltphase eines Trennschalters umfassenden Zyklus, mit Energiequellen, die nacheinander Öffnungs- und Schließvorgänge durchzuführen gestatten, wobei die Energie dieser Quellen durch die Wirkung von je eine Betätigungsspule (B1, B2) aufweisenden Organen freisetzbar ist, dadurch gekennzeichnet, daß jede Betätigungsspule (B1, B2), die eine Perkussionsspule ist, in einem Schaltkreis angeordnet ist, der einen Kondensator (C1, C2), und einen steuerbaren Unterbrecher (I1, I2) enthält, und daß die Einrichtung eine Ladekreis (T1—T3, TR1—TR3, D, DZ, C) für die Kondensatoren (C1, C2) ausgehend von den Fehlerströmen und ein Überstromrelais (R) aufweist, das sequentielle Steuersignale für die Unterbrecher (I1, I2) erarbeitet.

2. Einrichtung nach Anspruch 1, dadurch gekennzeichnet, daß die Energiequellen gespannte Federn sind.

3. Einrichtung nach einem der Ansprüche 1 bis 2, dadurch gekennzeichnet, daß die Einrichtung eine erste (B1) und eine zweite Betätigungsspule (B2) zur Betätigung zweier je einer gespannten Feder zugeordneter Perkussionsauslöser für die Öffnung bzw. das Schließen des Trennschalters aufweist, wobei der Unterbrecher (I1), der der ersten Spule (B1) zugeordnet ist, unmittelbar vom Relais (R) gesteuert wird, während der Unterbrecher (I2), der der zweiten Spule (B2)· zugeordnet ist, durch das Relais (R) über einen Zeitverzögerungskreis (T) gesteuert wird.

**Claims**

1. A device for controlling a cycle comprising at least one disconnecting phase and at least one reconnecting phase of a circuit breaker which is provided with energy sources for enabling successively opening and closing operations, the energy of said sources being releasable by means of mechanisms each provided with an actuating coil (B1, B2), characterized in that each actuating coil (B1, B2) which is a percussion coil, is disposed in a circuit comprising a capacitor (C1, C2) and a controllable switch (I1, I2), the device comprising a circuit (T1—T3, TR1—TR3, D, DZ, C) for charging the capacitors (C1, C2) from the fault currents, and an overcurrent relay (R) which generates sequential signals for controlling the switches (I1, I2).

2. A device according to claim 1, characterized in that the energy sources are loaded springs.

3. A device according to any one of claims 1 to 2, characterized in that the device comprises a first (B1) and a second actuating coil (B2) of two percussion mechanisms each being associated to a loaded spring respectively for opening and for closing the circuit breaker, the switch (I1) associated to the first coil (B1) being controlled directly by the relay (R), the switch (I2) associated to the second coil (B2) being controlled by the relay (R) through a time delay circuit (T).

# FIG.1

# FIG.2

0 078 534

# FIG.3

# FIG.4

3